# EUROPÄISCHE PATENTANMELDUNG

(11) **EP 0 786 657 A2**
(43) Veröffentlichungstag der Anmeldung: **30.07.1997**
(21) Anmeldenummer: 97100440.3
(22) Anmeldetag: 14.01.1997
(51) Int. Cl.: G01M 17/007

(54) **Verfahren zur Fesselung und Lenkung eines Fahrzeugs auf Prüfständen**

(30) Priorität: 25.01.1996 DE 19602495
(71) Anmelder: SCHENCK KOMEG GmbH, 66571 Eppelborn (DE)
(72) Erfinder: Storck, Karlheinz, Dr., 64367 Mühltal (DE)
(74) Vertreter: Sievers, Uwe, Dipl.-Ing.

(57) **Zusammenfassung**

Bei einem Verfahren zur Fesselung und Lenkung eines Kraftfahrzeugs auf einem Prüfstand insbesondere eines am Ende einer Fertigungsstraße für Kraftfahrzeuge angeordneten Prüfstands wird zur Lösung der Aufgabe eine Fahrzeugfesselung und Lenkung auf Prüfständen zu schaffen, bei der Bewegungen des Fahrzeugs aufgrund vertikaler Anregungen an den Rädern so kompensiert werden, daß am Fesselungspunkt außer den Reaktionen auf den Fahrzeugantrieb keine Zwangskräfte auf das Fahrzeug übertragen werden und die seitlichen Bewegungen des Fahrzeugs am Fesselungspunkt durch Nutzung der entsprechenden Folgebewegung der Fesselungseinrichtung in eine stabilisierende Lenkbewegung umgesetzt werden, vorgeschlagen, daß ein an sich bekanntes ebenes Gelenkgetriebe als räumliches Getriebe ausgebildet und in Sonderabmessung und in Sonderlage durch Parametervariation so angepaßt wird, daß ein spezieller Koppelpunkt der vorgegebenen Fläche innerhalb vernachlässigbarer Toleranzen folgt; darüberhinaus wird auch eine Vorrichtung zur Durchführung des Verfahrens offenbart.

## Beschreibung

Die Erfindung betrifft ein Verfahren zur Fesselung und Lenkung eines Kraftfahrzeugs auf einem Prüfstand, insbesondere eines am Ende einer Fertigungsstraße für Kraftfahrzeuge angeordneten Prüfstands.

Üblicherweise werden Kraftfahrzeuge auf Kraftfahrzeugprüfständen ohne Vertikalanregung geprüft. Künftig werden Kraftfahrzeuge auf entsprechenden Fahrzeugprüfständen vermehrt auch vertikal belastet. Wegen der resultierenden Prüflingsbewegungen werden an eine Fesselungs- bzw. Lenkeinrichtung deshalb andere und höhere Anforderungen gestellt als an herkömmlichen Kraftfahrzeugprüfständen.

Vertikal angeregt wird bei Komfortuntersuchungen, insbesondere auf Flachbahnprüfständen oder auf Prüfständen mit Rütteleinrichtungen am Bandende bei der Herstellung von Kraftfahrzeugen, um vor der Einstellung der Radgeometerie des Kraftfahrzeugs das Setzen der elastischen Fahrwerkselemente zu erzwingen.

Für konventionelle Untersuchungen reicht es aus, das Fahrzeug auf dem Prüfstand im wesentlichen starr festzuhalten. Bei frontangetriebenen Fahrzeugen werden zur Verringerung seitlicher Zwangskräfte auch reine Längsfesselungen und Hilfsmittel zum Lenken eingesetzt. Als Beispiel wird angegeben, das Festhalten des Lenkrads am oberen Scheitel durch Verspannen gegen Fixpunkte in einer Prüfhalle mit einem Seil.

Die Längsfesselungen werden hierbei voll wirksam, wenn bei Rollprüfständen auf dem Rollenscheitel gefahren wird. Sie dienen als Sicherheitseinrichtung, wenn die Fahrzeugräder zwischen Doppelrollen betrieben werden.

Wird das Fahrzeug zur Simulation unebener Fahrbahn mit vertikaler Anregung betrieben, so werden Bewegungen in sechs Freiheitsgraden angeregt. Durch Rollen, Stampfen, Nicken, Gieren, Wanken resultieren dann bei konventioneller Fesselung Zwangskräfte, die das Prüfergebnis in unzulässiger Weise beeinflussen. Auch korrigierende Lenkbewegungen führen bei konventioneller Lenkreinrichtung wegen der vertikalen und rotatorischen Bewegungsanteile des Fahrzeugs zu praxisfernen Betriebszuständen, da sich die Bezugsdistanz zwischen oberem Lenkradscheitel und einem Fixpunkt in der Halle ändert. Instabiles Verhalten aufgrund der Bewegungsrückwirkung auf die Lenkung ist nicht auszuschließen.

Für Prüfstände mit seitlichen und in begrenztem Maße auch vertikalen Fahrzeugbewegungen ist eine Fahrzeugfesselung bekannt, bei der die Karosserie des Fahrzeugs mit einem Gestell kinematisch so festgehalten ist, daß vertikale Bewegungen und rotatorische Bewegungen um einen Punkt im Fahrzeug möglich bleiben. Auch wurde durch die europäische Patentanmeldung 92 109 007.2 bei vertikaler Anregung als Reaktion auf dynamisch auftretende Seitenkräfte bei Lenkmanövern bereits vorgeschlagen, eine Fesselung durchzuführen, bei der die Wirkungen, hervorgerufen aus den vertikalen Anregungen, nicht durch die Fesselung beeinflußt werden.

Der vorliegenden Erfindung liegt die Aufgabe zugrunde, ein Verfahren und eine Einrichtung zur Fesselung von Kraftfahrzeugen und deren Lenkung auf Prüfständen zu schaffen, bei der Bewegungen des Fahrzeugs aufgrund vertikaler Anregungen an den Rädern so kompensiert werden, daß am Fesselungspunkt außer den Reaktionen auf den Fahrzeugantrieb keine Zwangskräfte auf das Fahrzeug übertragen werden und die seitlichen Bewegungen des Fahrzeugs am Fesselungspunkt durch Nutzung der entsprechenden Folgebewegung der Fesselungseinrichtung in eine stabilisierende Lenkbewegung umgesetzt werden. Diese Aufgabe wird mit den kennzeichnenden Merkmalen des Verfahrens Anspruch 1 dadurch gelöst, daß ein an sich bekanntes ebenes Gelenkgetriebe als räumliches Getriebe ausgebildet und in Sonderabmessung und in Sonderlage durch Parametervariation so angepaßt wird, daß ein spezieller Koppelpunkt einer vorgegebenen Fläche innerhalb vernachlässigbarer Toleranzen folgt. Durch diese Verfahrensweise wird ein Aufschaukeln der künstlich angeregten vertikalen Bewegungen durch die Fesselung vollständig vermieden. Als eine Ausgestaltung des erfinderischen Verfahrens wird gemäß des Kennzeichens des Anspruchs 2 unter Schutz gestellt, daß diese Fläche in der bevorzugten Ausführungsform die Begrenzungsfläche eines Rotationskörpers ist und daß Bewegungskomponenten von Gliedern des Getriebes durch Gestaltung von Abtrieben so ausgekoppelt werden, daß nur die Komponenten einer Vorzugsrichtung der Bewegung dieser Glieder am Abtrieb auftreten, so daß diese Komponenten zu Meßzwecken oder direkten mechanischen Stellzwecken verwendet werden. Hierdurch wird eine schädliche Wirkung der Fesselungsglieder auf die Führung des Fahrzeugs völlig ausgeschlossen.

In noch weiterer Ausgestaltung des Verfahrens wird mit Anspruch 3 unter Schutz gestellt, daß zur automatischen Korrektur der seitlichen Position des Fahrzeugs durch Eingriff am Lenkrad oder Gestänge der Lenkgeometrie die Komponenten relativ als Korrekturbewegungen zwischen Punkten des Fahrzeugs und Eingriffspunkten an Lenkrad oder Gestänge der Lenkgeometrie eingeleitet werden. Hierdurch werden zwangsläufig die durch die vertikale Bewegung auftretenden Folgebewegungen in eine stabilisierende Lenkbewegung für das Fahrzeug umgelenkt.

Ausgehend von einer Vorrichtung zur Fesselung und Lenkung eines Kraftfahrzeugs mit einem Lenkrad und einer hiermit verbundenen Lenkung auf einen Prüfstand zur Durchführung des Verfahrens das Kennzeichen der Erfindung darin gesehen, daß ein an einer Fahrzeugfrontseite befindlicher Ankoppelpunkt auf einer gemittelten Rollachse des Kraftfahrzeugs lediglich mit einem in einem fest angeordneten Gehäuse Längsbewegungen durchführenden Element mit einem Gelenk über eine Koppelstange verbunden ist, daß auf der Koppelstange ein weiteres Gelenk vorhanden ist, an welchem eine Kurbel angreift, daß diese Kurbel mit einem Ende eines drehbaren gelagerten Zapfens einstellbar verbunden ist, dessen Achse vertikal verläuft, wobei diese Achse einen Kurbelmittelpunkt bildet, daß das andere Ende des Zapfens mit einem Hebel verbunden ist, der mit der Kurbel, insbesondere einen Winkel von 180 Grad einschließt, daß der Hebel ein einstellbares Ende besitzt, daß das Ende über einen am Fahrzeug festen Gelenkpunkt mittels einer Führungsstange mit dem Lenkrad des Fahrzeugs oder mit dessen Lenkung gelenkig verbunden ist.

Durch diese Vorrichtung wird in einem geschlossenen Kreis ein Führen des Kraftfahrzeugs durch Lenkbewegungen desselben erreicht ohne daß Zwangskräfte auf das Fahrzeug einwirken können und zwar hervorgerufen durch die in den Prüfstand eingeleiteten Kräfte und Momente, die zum Rollen, Stampfen, Gieren und Nicken des Fahrzeugs führen.

In Anspruch 5 wird eine Ausgestaltung der erfinderischen Vorrichtung darin gesehen, daß zwischen dem einstellbaren Ende des Hebels und der Führungsstange einerseits und dem Lenkrad und der Führungsstange andererseits eine weitere Stange angeordnet ist, daß die Führungsstange durch den am Fahrzeug festen Punkt so aufgeteilt wird, daß einerseits das mit dem Ende des einstellbaren Hebels gelenkig verbundene Ende der Stange und das mit dem Ende der einstellbaren Führungsstange gelenkig verbundene andere Ende der Stange inetwa in einer horizontalen Ebene verlaufen und daß andererseits das andere Ende der einstellbaren Führungsstange gelenkig so mit dem einen Ende der weiteren Stange verbunden ist und daß das andere Ende der weiteren Stange gelenkig so mit dem Lenkrad verbunden ist, daß die gelenkigen Verbindungspunkte in einer inetwa horizontalen Ebene verlaufen.

Ausgehend von einer Vorrichtung zur Fesselung und Lenkung eines Kraftfahrzeugs mit einem Lenkrad und einer hiermit verbundenen Lenkung auf einem Prüfstand zur Durchführung des Verfahrens wird in Anspruch 6 unter Schutz gestellt, daß ein an der Fahrzeugfrontseite befindlicher Ankoppelpunkt auf einer gemittelten Rollachse des Kraftfahrzeugs lediglich mit einem in einem fest angeordneten Gehäuse Längsbewegungen durchführenden Element mit einem Gelenk über eine Koppelstange verbunden ist, daß auf der Koppelstange ein weiteres Gelenk vorhanden ist, an welchem eine Kurbel angreift, daß diese Kurbel mit einem Ende eines drehbaren gelagerten Zapfens einstellbar verbunden ist, dessen Achse vertikal verläuft, wobei diese Achse einen Kurbelmittelpunkt bildet, daß das andere Ende des Zapfens mit einem Hebel verbunden ist, der mit der Kurbel insbesondere einen Winkel von 180 Grad einschließt, daß der Hebel ein einstellbares Ende besitzt, daß die Drehung des Hebels über ein Potentiometer als elektrische Information aufgenommen wird, daß diese Information einer Auswerteeinheit zugeführt wird, daß in der Auswerteeinheit ein der Nullage eines Punktes des Lenkrades oder eines Punktes der Lenkung entsprechende Wert gespeichert, mit der Information verglichen wird, daß in Abhängigkeit des sich ergebenden Differenzwertes der Punkt des Lenkrades in seine Nullage gedreht wird oder daß der Punkt der Lenkung in seine Nullage zurückgeführt wird.

Eine noch andere Vorrichtung zur Durchführung des erfinderischen Verfahrens ist gemäß Anspruch 7 dadurch gekennzeichnet, daß ein an der Fahrzeugfrontseite befindlicher Ankoppelpunkt auf einer gemittelten Rollachse des Fahrzeugs lediglich mit einem in einem fest angeordneten fremdgelagerten Gehäuse Längsbewegung durchführenden Element mit einem Gelenk über eine Koppelstange verbunden ist, daß auf der Koppelstange ein weiteres Gelenk vorhanden ist, an welchem eine Kurbel angreift, daß diese Kurbel mit einem Ende eines drehbaren gelagerten Zapfens einstellbar verbunden ist, dessen Achse vertikal verläuft, wobei diese Achse einen Kurbelmittelpunkt bildet, daß das andere Ende des Zapfens mit einem Hebel verbunden ist, der mit der Kurbel insbesondere einen Winkel von 180 Grad einschließt, daß der Hebel ein einstellbares Ende besitzt, daß das einstellbare Ende über ein flexibles Mittel mit einem Punkt am Lenkrad oder der Lenkung verbunden ist, daß ein erstes längsverschiebliches Endstück des flexiblen Mittels mit dem fest angeordneten fremdgelagerten Gehäuse verbunden ist und daß ein zweites längsverschiebliches Endstück des flexiblen Mittels mit einem karosseriefesten Punkt am Fahrzeug verbunden ist.

Das erfinderische Verfahren läßt sich somit mit Hilfe mit mechanisch elektrischer und hydraulischer Hilfsmittel durchführen. Damit sind die erfindungsgemäßen Vorrichtungen sehr wohl anpaßbar an alle Gegegebenheiten, die bei der Herstellung von Fahrzeugen benutzt werden, so daß keinerlei spezielle Sondereinrichtung erforderlich ist, die Vorrichtungen zur Durchführung des Verfahrens zu betreiben.

Dem Verfahren und allen Mitteln zur Durchführung des erfinderischen Verfahrens ist die wesentliche Erkenntnis zu eigen, daß die durch die eingeleiteten Kräfte oder Momente auftretenden Bewegungen des Fahrzeugs durch eine einzige Fesselung des Fahrzeuges an einem fremdgelagerten Punkt bewirkt wird, wobei die auftretenden Reaktionskräfte von diesem Punkt ausgehend sich in einer Längsbewegung, die entweder auf das Lenkrad des Fahrzeugs oder auf das Lenkgestänge des Fahrzeugs übertragen werden, um eine Korrekturlenkung durchzuführen. Hiermit wird das Fahrzeug ohne Verfälschung, hervorgerufen durch die eingeleiteten Kräfte, aktiv in seine Nullage zurückgelenkt.

Die Erfindung wird nunmehr anhand eines Ausführungsbeispiels näher erläutert:
Es zeigen:
Figur 1 schematisch eine kinematische Anordnung in Seitenansicht
Figur 2 die Anordnung nach Figur 1 in Draufsicht
Figur 3 eine gesamte Fesselungs- und Lenkeinrichtung
Figur 4 einen Ausschnitt vergrößert aus Figur 3
Figur 5 eine Fesselungs- und Lenkreinrichtung mit flexibler Verbindung
Figur 6 eine Ausgestaltung einer Fesselungs- und Lenkreinrichtung mit Gestänge und
Figur 7 eine Ausgestaltung einer Fesselungs- und Lenkeinrichtung mit Lenkzylinder und elektrischer Auswerteeinheit.

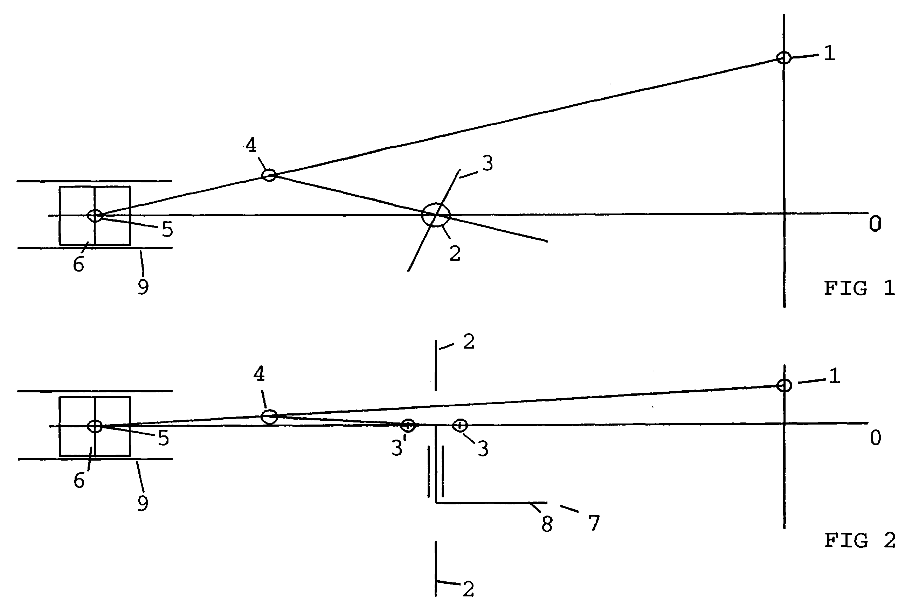

Mit den in den Figuren 1 bis 7 dargestellten Einrichtungen bzw. mit den kinematischen Anordnungen nach Figur 1 und 2 werden Fahrzeuge, die auf Prüfständen mit Einleitung vertikaler Anregungen an den Fahrzeugrädern betrieben werden, so gefesselt, daß außer in Längsrichtung, das ist die Wirkrichtung des Fahrzeugantriebs, keine das Prüfergebnis veränderte Zwangskräfte ausgeübt werden.

Gleichzeitig stellen die Einrichtungen einen Abtrieb zur Verfügung, dessen Ausgangsbewegung zur Korrektur der seitlichen Fahrzeugposition auf Eingriffspunkte in der Wirkungskette der Lenkung getragen werden können.

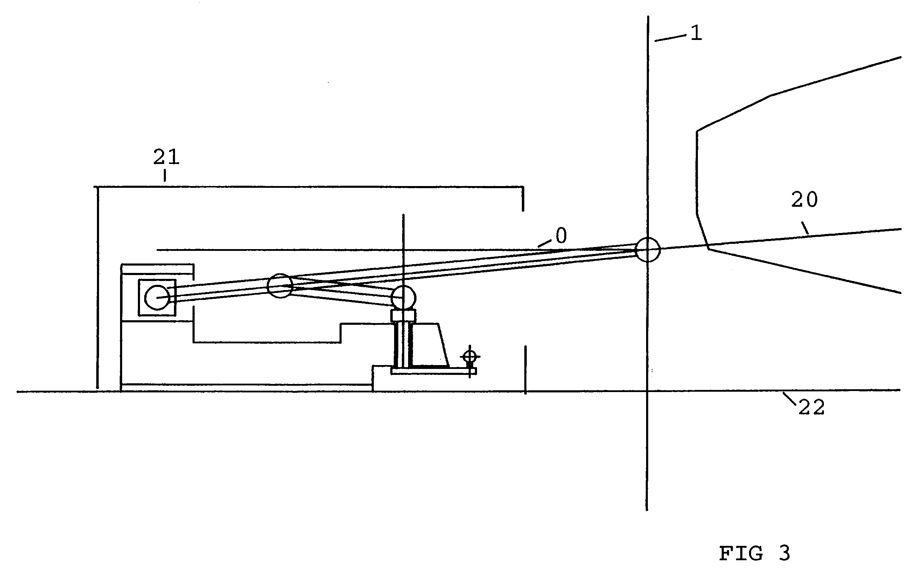

Die Kombination der als Rollen, Stampfen, Gieren, Nicken, Wanken bekannten Bewegungen eines vertikal dynamisch angeregten Fahrzeugs hat folgende Auswirkung: ein Punkt P am vorderen Fahrzeugende, gewählt auf einer gemittelten Rollachse (vergleiche das Bezugszeichen 20 in Figur 3), wird sich im wesentlichen in eine Ebene senkrecht zur Fahrzeuglängsachse bewegen, wenn die Längskomponenten aus rotatorischen Bewegungsanteilen des Fahrzeugs als vernachlässigbar klein angesehen werden können.

In erster Näherung würde daher bei kleinen vertikalen und horizontalen Auslenkungen des Fahrzeugs eine Fesselung ausreichend sein, bei der dieser Punkt P zwangsläufig in der zur Fahrzeuglängsachse senkrechten Ebene durch den Fesselungspunkt gehalten wird.

Längseinwirkungen aus den rein rotatorischen Bewegungsanteilen des Fahrzeugs bei vertikal dynamischer Anregung an den Rädern würden kompensiert, wenn der Punkt P nicht auf einer zur Fahrzeuglängsachse senkrechten Ebene, sondern auf einer Kugelschale um das Bewegungszentrum des Fahrzeugs gehalten würde.

Da die rotatorischen Anteile die vertikal parallelen Bewegungsanteile bei starker vertikaler Anregung überwiegen, was bei Nicken der Fall ist, ist eine Lösung sinnvoll, bei der im Bereich kleiner bis mittlerer Auslenkungen z. B. von +- 0 bis +-30 mm eine Ebene, darüberhinaus z. B. von +- 30 bis +- 60 mm progressiv, eine Kugelschale angenähert wird, deren Mittelpunkt im Idealfall mit dem Zentrum der rotatorischen Bewegungen des Fahrzeugs übereinstimmt. Diese Oberflächenkontur wird als Idealkontur bezeichnet.

Es wird bereits jetzt darauf hingewiesen, daß bei Verwendung einer langen Stange als Fesselung, der Kurbelmittelpunkt der Stangenbewegung im Fixpunkt der Stange und nicht, wie erforderlich, im Drehzentrum des Fahrzeugs liegen würde.

Die Basis für eine Fesselungs- und Lenkeinrichtung gemäß der Erfindung besteht aus einem Gelenkgetriebe. Eine nicht geschränkte Schubkurbel in der inneren Totlage, gilt als Ausgangslage, wobei deren Koppel über den Kurbelmittelpunkt hinaus verlängert ist.

Auf dieser Koppel wird ein Koppelpunkt gewählt, der in dieser Ausgangslage mit dem Wendepunkt zusammenfällt. Wegen der Symmetrie des Getriebes folgt als Koppelkurve hier eine sechspunktig genäherte Gerade, wie aus der Literatur bereits bekannt ist. Durch eine Parametervariation (dieses Verfahren ist ebenfalls ansich bekannt) wird der Koppelpunkt gegenüber der Wendepunktposition so verschoben, daß die Koppelkurve der als ideal erkannten Form innerhalb vernachlässigbarer Toleranzen erfolgt.

Dieses so geschriebene Getriebe wird nunmehr als räumliches Getriebe eingesetzt.

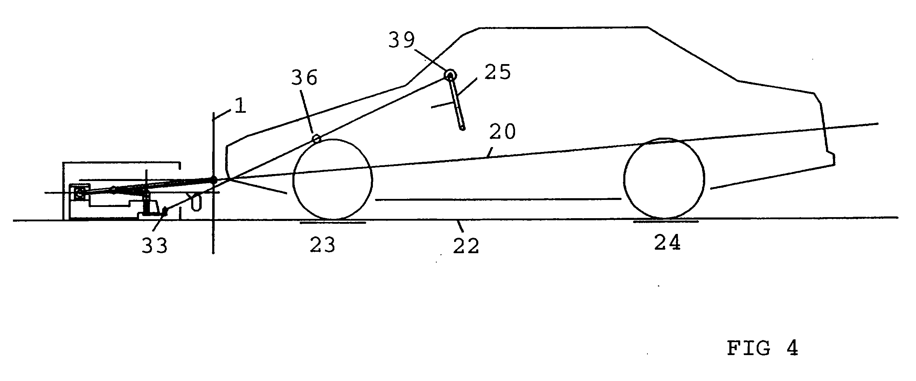

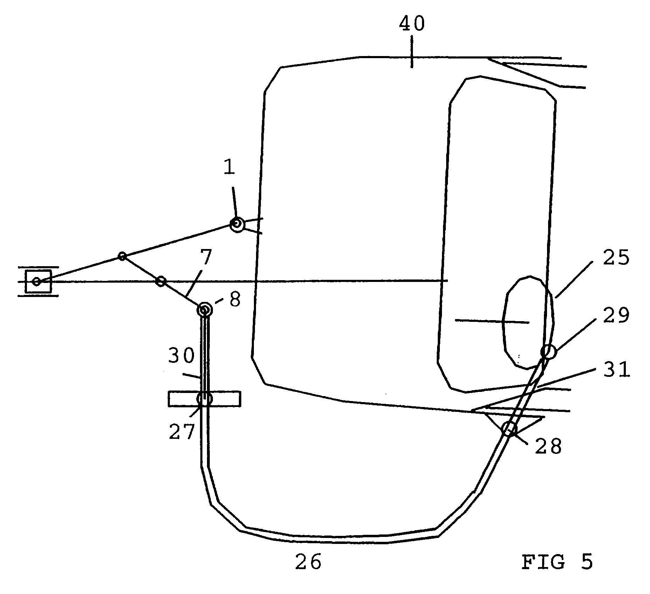

Aus den Figuren 1 geht die Seitenansicht, aus der Figur 2 die Draufsicht der kinematischen Anordnung hervor, während Figur 3 die gesamte Fesselungs- und Lenkreinrichtung zeigt und Figur 4 einen vergrößerten Ausschnitt aus Figur 3 darstellt. In der Figur 5 ist eine Ausführungsform der Fesselungs- und Lenkeinrichtung dargestellt, bei der die Übertragung mittels flexibler Verbindung geschieht.

Das Gelenkgetriebe ist in der bevorzugten Ausführungsform so gestaltet, daß Koppel und Kurbel um die Symmetrieachse des Getriebes rotierbar sind, so daß die nun vom Koppelpunkt beschriebene Fläche in der bevorzugten Ausführungsform die Begrenzungsfläche eines Rotationskörpers ist.

Hierbei werden in der bevorzugten Ausführungsform die Komponenten so gewählt, daß nach Figur 1 und 2 das Gelenk 1 der Ankoppelpunkt 3 Freiheitsgrade, das Gelenk 2 der Kurbelmittelpunkt 2 Freiheitsgrade, das Gelenk 4 zwischen der Koppel 1-5 und der Kurbel 2-4 mindestens einen Freiheitsgrad besitzen und die Summe der Gelenkfreiheitsgrade der Gelenke 5 der Koppel 1-5 gegenüber dem Gleitstein 6 und des Gleitsteins 6 gegenüber der festen Ebene 9 größer oder gleich 3 ist.

In der bevorzugten Ausführungsform des Gelenks 2 dem Kurbelmittelpunkt sind die Gelenkachsen 2-2 vertikal und 3-3 horizontal, um die vertikale Achse 2-2 rotierbar, angeordnet. Hierdurch wird eine horizontale Auslenkung des Kurbelendpunktes 4, unbahängig von seiner eventuellen vertikalen Auslenkung, in eine Drehung der vertikalen Achse 2-2 des Gelenks 2 umgesetzt und beispielsweise am Endpunkt 8 des Hebels 7 abgreifbar.

Der Ankoppelpunkt 1 der Fesselung wird auf der gemittelten Rollachse 20 des Fahrzeugs angeordnet. Hierdurch werden am Ankoppelpunkt 1 Bewegungskomponenten aus der Fahrzeugrotation um die Fahrzeuglängsachse minimiert, seitliche Fahrzeugverschiebungen und Rotationsteile um die Fahrzeughochachse jedoch vollständig auf den Hebel 7 übertragen.

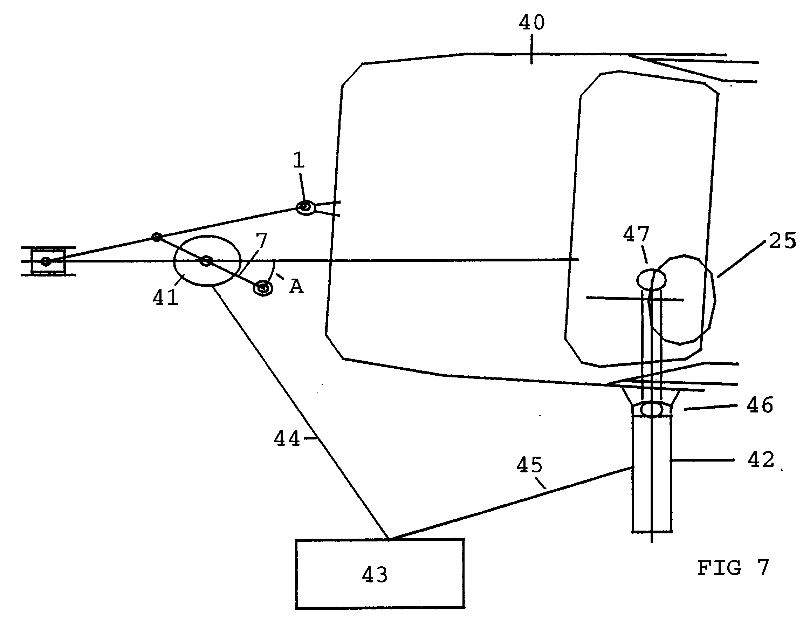

Eine in Figur 7 dargestellte Drehung A wird nach Figur 5 in einer bevorzugten Ausgestaltung über ein flexibles Mittel 26 zur Übertragung von Stellwegen und Stellkräften beispielsweise mittels Flexballzug zwischen einem karosseriefesten Punkt 28 und dem Lenkrad 25 als Stellweg zur Korrektur der seitlichen Fahrzeugposition aufgebracht. Hierbei sind die längsverschieblichen Endstücke 30 und 31 des Übertragungsmittels 26 in den Kugelgelenken 27 gegenüber dem ortsfesten Gestell 0 bzw. 28 gegenüber der Karosserie 40 gelagert. In gleicher Weise wird nach in einer anderen Ausgestaltung der Einrichtung der genannte Stellweg zwischen einem karosseriefesten Punkt und einem geeigneten Angriffspunkt am Gestänge der Lenkung aufgebracht.

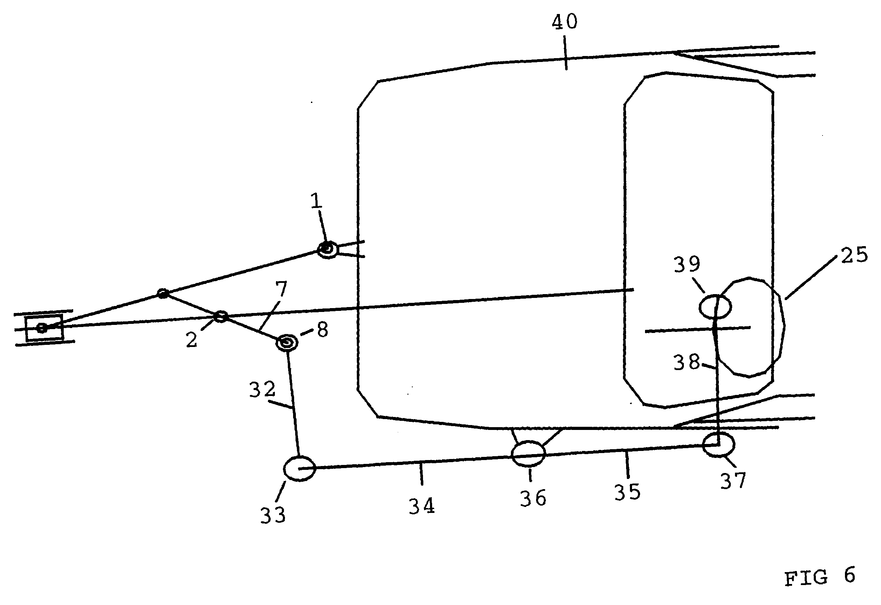

Weiter werden als Mittel zur direkten mechanischen Übertragung alternativ neben beispielsweise Bowdenzügen auch Gestänge, wie in einer Ausgestaltung nach Figur 6 verwendet.

Hierbei wird zur Übertragung des dem Winkel A entsprechenden Korrekturweges ein Hebel 34,35 eingesetzt, dessen Gelenkpunkt 36 karosseriefest angeordnet ist und dessen Endpunkt 33 über eine Stange 32 mit dem Abtriebsgelenk 8 und Endpunkt 37 über eine Stange 38 mit dem Gelenkpunkt 39 des Lenkradscheitels verbunden ist. Die Drehachse in Gelenkpunkt 36 ist so angeordnet und die Längen der Hebelseiten 34 und 35 sind so gewählt, daß Gelenkpunkt 33 inetwa auf der Höhe von Gelenkpunkt 8 und Gelenkpunkt 37 inetwa auf der Höhe des Lenkradscheitels 39 liegt, wobei das Übersetzungsverhältnis des Gestänges bevorzugt durch die Wahl der Längen 34,36 und der Länge 7 bestimmt wird.

Auch hydrostatische Übertragungsmittel werden alternativ zu den vorgenannten Mitteln zur Übertragung der genannten Drehung bzw. des genannten Stellwegs vorgeschlagen.

Ferner wird nach Figur 7 eine indirekte Nutzung der genannten Drehung A unter Schutz gestellt, bei der die genannte Drehung A durch Aufnahmemittel 41, z. B. ein Potentiometer, erfaßt, über die Leitung 44 an die Auswerteeinheit 43 weitergeleitet, die über die Verbindung 45 Servomechanismen 42, z. B. einen Elektrozylinder ansteuert, die die entsprechenden Wege relativ zwischen einem Punkt der Fahrzeugkarosserie 46 und einem Eingriffspunkt 47 an Lenkrad oder Gestänge der Lenkgeometrie unmittelbar, wie gezeigt, oder über z. B. eine Zwischenstange erzwingen.

Als alternative Servoeinrichtung ist anstelle eines Elektro- oder Hydraulikservozylinders 42 auch ein hier nicht gezeigter direkt auf das Lenkrad wirkender Drehantrieb vorgeschlagen.

In einer weiteren Ausführungsform wird vorgeschlagen, direkt in die Servolenkung des Fahrzeugs einzugreifen und hierzu mindestens oder teilweise folgende Mittel zu verwenden:
Mittel zur Erfassung der seitlichen Auslenkung des Fahrzeugs, vorzugsweise in der Nähe der Rollachse an einer der beiden Fahrzeugstirnseiten.
Mittel zur Erzeugung eines dem Servosystem des Fahrzeugs entsprechenden Stellsignals oder einer dem Servosystem des Fahrzeug entsprechenden Stellenergie proportional zur Größe der erfaßten seitlichen Abweichung. Mittel zur Einkopplung des Stellsignals oder der Stellenergie in das Servosystem der Fahrzeuglenkung.

## Patentansprüche

1. Verfahren zur Fesselung und Lenkung eines Kraftfahrzeugs auf einem Prüfstand, insbesondere eines am Ende einer Fertigungsstraße für Kraftfahrzeuge angeordneten Prüfstands, dadurch gekennzeichnet, daß ein an sich bekanntes ebenes Gelenkgetriebe als räumliches Getriebe ausgebildet und in Sonderabmessung und Sonderlage durch Parametervariation so angepaßt wird, daß ein spezieller Koppelpunkt einer vorgegebenen Fläche innerhalb vernachlässigbarer Toleranzen folgt.

2. Verfahren nach Anspruch 1, dadurch gekennzeichnet, daß diese Fläche in der bevorzugten Ausführungform die Begrenzungsfläche eines Rotationskörpers ist und daß Bewegungskomponenten von Gliedern des Getriebes in Gestaltung von Abtrieben so ausgekoppelt werden, daß nur die Komponenten einer Vorzugsrichtung der Bewegung dieser Glieder am Abtrieb auftreten, so daß diese Komponenten zu Meßzwecken oder direkten mechanischen Stellzwecken verwendet werden können.

3. Verfahren nach Anspruch 1 und/oder 2, dadurch gekennzeichnet, daß vorzugsweise zur automatischen Korrektur der seitlichen Position des Fahrzeugs durch Eingriff an Lenkrad oder Gestänge der Lenkgeometrie die Komponenten relativ als Korrekturbewegungen zwischen Punkten des Fahrzeugs und Eingriffspunkten an Lenkrad oder Gestänge der Lenkgeometrie eingeleitet werden.

4. Vorrichtung zur Fesselung und Lenkung eines Fahrzeugs mit einem Lenkrad und einer hiermit verbundenen Lenkung auf einem Prüfstand zur Durchführung des Verfahrens nach einem oder mehreren der Ansprüche 1 bis 3, dadurch gekennzeichnet, daß ein an einer Fahrzeugfrontseite befindliche Ankoppelpunkt auf einer gemittelten Rollachse 20 des Fahrzeugs lediglich mit einem Längsbewegungen in einem fest angeordneten fremdgelagerten Gehäuse durchführenden Element mit einem Gelenk über eine Koppelstange verbunden ist, daß auf der Koppelstange ein weiteres Gelenk vorhanden ist, an welchem eine Kurbel angreift, daß diese Kurbel mit einem Ende eines drehbaren gelagerten Zapfens einstellbar verbunden ist, dessen Achse vertikal verläuft, wobei diese Achse einen Kurbelmittelpunkt bildet, daß das andere Ende des Zapfens mit einem Hebel verbunden ist, der mit der Kurbel, insbesondere einen Winkel von 180 Grad einschließt, daß der Hebel ein einstellbares Ende besitzt, daß das Ende über einen am Fahrzeug festen Gelenkpunkt mittels einer Führungsstange mit dem Lenkrad des Fahrzeugs oder mit dessen Lenkung gelenkig verbunden ist.

5. Vorrichtung nach Anspruch 4 dadurch gekennzeichnet, daß mit dem einstellbaren Ende des Hebels und der Führungsstange einerseits eine Stange und dem Lenkrad und der Führungsstange andererseits eine weitere Stange angeordnet sind, daß die Führungsstange durch den am Fahrzeug festen Punkt so aufgeteilt ist, daß einerseits mit dem Ende des einstellbaren Hebels gelenkig verbundene Ende der Stange und das mit dem Ende der einstellbaren Führungsstange gelenkig verbundene andere Ende der Stange inetwa in einer horizontalen Ebene verlaufen und daß andererseits das andere Ende der einstellbaren Führungsstange gelenkig so mit dem einen Ende der weiteren Stange verbunden ist und daß das andere Ende der weiteren Stange gelenkig so mit dem Lenkrad verbunden ist, daß die Gelenkverbindungspunkte in einer inetwa horizontalen Ebene verlaufen.

6. Vorrichtung zur Fesselung und Lenkung eines Fahrzeugs mit einem Lenkrad und einer hiermit verbundenen Lenkung auf einem Prüfstand zur Durchführung des Verfahrens nach einem oder mehreren der Ansprüche 1-3, dadurch gekennzeichnet, daß ein an einer Fahrzeugfrontseite befindlicher Ankoppelpunkt auf eine gemittelten Rollachse des Fahrzeugs lediglich mit einem längs beweglichen in einen fest angeordneten fremdgelagerten Gehäuse durchführenden Element mit einem Gelenk über eine Koppelstange verbunden ist, daß auf der Koppelstange ein weiteres Gelenk vorhanden ist, an welchem eine Kurbel angreift, daß diese Kurbel mit einem Ende eines drehbaren gelagerten Zapfens einstellbar verbunden ist, dessen Achse vertikal verläuft, wobei diese Achse einen Kurbelmittelpunkt bildet, daß das andere Ende des Zapfens mit einem Hebel verbunden ist, der mit der Kurbel insbesondere einen Winkel von 180 Grad einschließt, daß der Hebel ein einstellbares Ende besitzt, daß die Drehung des Hebels über ein Potentiometer als elektrische Information aufgenommen wird, daß diese Informationen einer Auswerteeinheit zugeführt wird, daß in der Auswerteeinheit ein der Nullage eines Punktes des Lenkrads oder eines Punktes der Lenkung entsprechende Wert gespeichert, mit der Information verglichen wird, daß in Abhängigkeit des sich ergebenden Differenzwerts der Punkt des Lenkrads in seine Nullage zurückgeführt wird oder daß der Punkt der Lenkung in seine Nullage zurückgeführt wird.

7. Vorrichtung zur Fesselung und Lenkung eines Fahrzeugs mit einem Lenkrad und einer hiermit verbundenen Lenkung auf einem Prüfstand zur Durchführung des Verfahrens nach einem oder mehreren der Ansprüche 1-3, dadurch gekennzeichnet, daß ein an einer Fahrzeugfrontseite befindliche Ankoppelpunkt auf einer gemittelten Rollachse des Fahrzeugs lediglich mit einem Längsbewegungen in einem fest angeordneten fremdgelagerten Gehäuse durchführendem Element mit einem Gelenk über eine Koppelstange verbunden ist, daß auf der Koppelstange ein weiteres Gelenk vorhanden ist, an welchem eine Kurbel angreift, daß diese Kurbel mit einem Ende eines drehbar gelagerten Zapfens einstellbar verbunden ist, dessen Achse vertikal verläuft, wobei diese Achse einen Kurbelmittelpunkt bildet, daß das andere Ende des Zapfens mit einem Hebel verbunden ist, der mit der Kurbel insbesondere einen Winkel von 180 Grad einschließt, daß der Hebel ein einstellbares Ende besitzt, daß das einstellbare Ende über ein flexibles Mittel mit einem Punkt am Lenkrad oder der Lenkung verbunden ist, daß ein erstes längsverschiebliches Endstück des flexiblen Mittels mit dem fest angeordneten Gehäuse verbunden ist und daß ein zweites längsverschiebliches Endstück des glexiblen Mittels mit einen karosseriefesten Punkt am Fahrzeug verbunden ist.
